# EUROPÄISCHE PATENTSCHRIFT

(11) **EP 1 063 249 B1**
(45) Veröffentlichungstag und Bekanntmachung des Hinweises auf die Patenterteilung: **13.10.2004**
(21) Anmeldenummer: 00110270.6
(22) Anmeldetag: 22.05.2000
(51) Int. Cl.: C08G 18/42, B32B 27/40

(54) **Verbundelemente enthaltend mindestens eine thermoplastische Folie und daran haftende Polyisocyanat-Polyadditionsprodukte**
Laminates at least containing a thermoplastic film and adhering polyisocyanate-polyadditionproducts
Laminés contenant au moins une feuille thermoplastique et des produits de polyaddition de polyisocyanates adhérants

(30) Priorität: 22.06.1999 DE 19928608
(43) Veröffentlichungstag der Anmeldung: 27.12.2000
(73) Patentinhaber: BASF AKTIENGESELLSCHAFT, 67056 Ludwigshafen (DE)
(72) Erfinder: Pohl, Wolfgang, Dr., 80797 München (DE); Partusch, Georg, 86932 Pürgen (DE); Fleischmann, Stefan, 84034 Landshut (DE)

(56) Entgegenhaltungen:
- EP-A- 0 484 275
- US-A- 4 592 947
- US-A- 5 869 593

## Beschreibung

Die Erfindung betrifft Verbundelemente enthaltend
(i) thermoplastischen Kunststoff, an den sich haftend
(ii) das Produkt der Umsetzung einer Reaktionsmischung enthaltend
   (a) Isocyanat,
   (b) Polyesterpolyalkohol mit einer Funktionalität von 2 bis 3 und einer Hydroxylzahl von 40 bis 400 mg KOH/g basierend auf der Kondensation von Adipinsäure und/oder Phthalsäureanhydrid mit Polytetrahydrofuran, Hexan-1, 6-diol, Butan-1,4-diol, Monoethylenglykol, Diethylenglykol, Trimethylolpropan und/oder Neopentylglykol
   und gegebenenfalls
   (c) Katalysatoren,
   (d) Treibmittel und/oder
   (e) Hilfs- und/oder Zusatzstoffe anschließt.

Des weiteren bezieht sich die Erfindung auf Verfahren zur Herstellung derartiger Verbundelemente und deren Verwendung.

Polyisocyanat-Polyadditionsprodukte erhältlich durch Umsetzung von Isocyanaten mit gegenüber Isocyanaten reaktiven Verbindungen sowie Verbundelemente von diesen Produkten mit weiteren Kunststoffen sind allgemein bekannt. Eine Belastung dieser Verbundelement durch hohe Temperaturen und Luftfeuchtigkeiten führt häufig zu einer unerwünschten Ablösung der Kunststoffe von den Polyisocyanat-Polyadditionsprodukten. Insbesondere beim Einsatz solcher Verbundelemente im Automobilbau für die eine solche Belastung nicht ausgeschlossen werden kann, ist eine Ablösung der Polyisocyanat-Polyadditionsprodukten von den weiteren Kunststoffen und damit eine Zerstörung des verbundelementes nicht akzeptabel.

Aufgabe der Erfindung war es somit, Verbundelemente zu entwickeln, die aufgrund ihrer hervorragenden mechanischen Eigenschaften beispielsweise im Automobilbau eingesetzt werden können und bei denen die Haftung zwischen dem Kunststoff und den daran haftenden Polyisocyanat-Polyadditionsprodukten auch bei einer Lagerung für 80 Stunden bei 80°C und 80 % rel. Luftfeuchtigkeit nicht verlorengeht.

Die Aufgabe konnte durch die eingangs beschriebenen Verbundelemente gelöst werden.

Die erfindungsgemäßen Verbundelemente können als thermoplastischen Kunststoff (i) übliche thermoplastische Kunststoffe enthalten, beispielsweise Acrylnitril-Butadien-Styrol (ABS), Polymethylmethacrylat (PMMA), Acrylnitril-Styrol-Acrylester (ASA), Polycarbonat (PC), thermoplastisches Polyurethan (TPU), Polyethylen, Polypropylen. Bevorzugt enthalten die Verbundelemente als (i) thermoplastische Polyolefin-Folie (TPO) wie Polyethylen und/oder Polypropylen, Styrolmaleinsäureanhydrid (SMA) und/oder ein Polycarbonat/Styrol-Acrylnitril/Acrylnitril-Butadien Blend (PC/ABS).

Die Kunststoffe (i) können in Form üblicher Materialien zur Herstellung der Verbundelemente eingesetzt werden, beispielsweise als Folien, im allgemeinen mit einer Dicke von 0,2 bis 2 mm.

Derartige Folien sind kommerziell erhältlich, und ihre Herstellung ist allgemein bekannt. Die Folien weisen bevorzugt eine Dicke von 0,2 bis 2 mm auf. Als (i) können auch mindestens zwei Schichten enthaltene Folien eingesetzt werden, wobei beispielsweise die eine Schicht einen ASA und/oder Polycarbonat-Werkstoff enthält.

Die Kunststoffe (i) aus Styrolmaleinsäureanhydrid (SMA) und/oder ein Polycarbonat/Styrol-Acrylnitril/Acrylnitril-Butadien Blend (PC/ABS) können in Form üblicher Materialien zur Herstellung der Verbundelemente eingesetzt werden, beispielsweise als Versteifungsteil für Instrumenten-Tafeln oder Türseitenteile.

Erfindungsgemäß schließen sich an den Kunststoff (i) haftend die Polyisocyanat-Polyadditionsprodukte (ii) an, beispielsweise Polyurethane, die gegebenenfalls Isocyanurat- und/oder Harnstoffstrukturen aufweisen können. Die Herstellung dieser Polyisocyanat-Polyadditionsprodukte (ii), bevorzugt der Polyurethane, die in kompakter oder bevorzugt zelliger Form, beispielsweise als Weichschaumstoff, Halbhartschaumstoff oder Hartschaumstoff, besonders bevorzugt als Halbhartschaumstoff vorliegen können, erfolgt erfindungsgemäß durch die eingangs dargestellte Umsetzung.

Zur Erzielung der verbesserten Haftung zwischen (i) und (ii) insbesondere unter feucht-warmen Bedingungen wird als erfindungswesentliches Merkmal mindestens ein Polyesterpolyalkohol mit einer Funktionalität von 2 bis 3, bevorzugt 2 und einer Hydroxylzahl von 40 bis 400, bevorzugt 40 bis 100, besonders bevorzugt 40 bis 80 mg KOH/g basierend auf der Kondensation von Adipinsäure (ADS) und/oder Phthalsäureanhydrid (PSA), bevorzugt ADS mit Polytetrahydrofuran (PTHF), Hexan-1,6-diol, Butan-1,4-diol, Monoethylenglykol, Diethylenglykol, Trimethylolpropan und/oder Neopentylglykol, bevorzugt Hexan-1,6-diol, Butan-1,4-diol und/oder Monoethylenglykol, in der Komponente (b) zur Herstellung der Polyisocyanat-Polyadditionsprodukte (ii) eingesetzt.

Der Fachmann würde bei einem Einsatz von Polyestern erwarten, daß die derart hergestellten Produkten aufgrund der Möglichkeit zur Hydrolyse der Esterbindung gerade keine verbesserte Haftung, besonders unter feuchten, insbesondere unter feucht-warmen Bedingungen aufweisen würden. Gerade zur Lösung der Aufgabe, eine verbesserte Haftung zu erreichen, war es für den Fachmann somit nicht naheliegend, Polyesterpolyole einzusetzen.

Bevorzugt setzt man enthaltend in (b) einen Polyesterpolyol ein, der eine Hydroxylzahl von 40 bis 80 mg KOH/g und eine Funktionalität von 2 aufweist und auf der Kondensation von ADS mit Monoethylenglykol und Butan-1,4-diol basiert.

Die Herstellung der erfindungsgemäßen Verbundelemente kann derart erfolgen, daß man
(a) Isocyanat,
(b) Polyesterpolyalkohol mit einer Funktionalität von 2 bis 3 und einer Hydroxylzahl von 40 bis 400 basierend auf der Kondensation von Adipinsäure (ADS) und/oder Phthalsäureanhydrid (PSA) mit Polytetrahydrofuran (PTHF), Hexan-1,6-diol, Butan-1, 4-diol, Monoethylenglykol, Diethylenglykol, Trimethylolpropan und/oder Neopentylglykol
gegebenenfalls in Anwesenheit von
(c) Katalysatoren,
(d) Treibmittel und/oder
(e) Hilfs und/oder Zusatzstoffe in Gegenwart von (i) umsetzt.

Zur Herstellung der erfindungsgemäßen Produkte können die Isocyanate (a) und die gegenüber Isocyanaten reaktiven Verbindungen (b) und gegebenenfalls (d) in solchen Mengen zur Umsetzung gebracht, daß das Äquivalenzverhältnis von NCO-Gruppen von (a) zur Summe der reaktiven Wasserstoffatome von (b) und gegebenenfalls (d) bevorzugt 0,3 bis 1,8:1, besonders bevorzugt 0,4 bis 1,0:1 und insbesondere 0,4 bis 0,6:1, beträgt. Falls das Produkt (ii) zumindest teilweise Isocyanuratgruppen gebunden enthalten, wird üblicherweise ein Verhältnis von NCO-Gruppen zur Summe der reaktiven Wasserstoffatome von 1,5 bis 60:1, vorzugsweise 1,5 bis 8:1, angewandt. Die Produkte werden üblicherweise nach dem bekannten one-shot oder dem ebenfalls bekannten Prepolymerverfahren hergestellt.

Bei dem bekannten Prepolymerverfahren wird in einem ersten Schritt üblicherweise aus (a) und im Unterschuß (b) ein Isocyanatgruppen-aufweisendes Prepolymer hergestellt, das anschließend mit weiterem (b) zu den gewünschten Produkten umgesetzt wird.

Die Umsetzung zum Produkt kann beispielsweise durch Handguß, durch Hochdruck- oder Niederdruckmaschinen, oder durch RIM-Verfahren (reaction-injection-molding) üblicherweise in offenen oder bevorzugt geschlossenen Formwerkzeugen durchgeführt werden. Geeignete Verarbeitungsmaschinen sind handelsüblich erhältlich (Z.B. Fa. Elastogran, Isotherm, Hennecke, Kraus Maffei u.a.).

Zur Herstellung von kompakten Produkten als (ii) hat es sich als vorteilhaft erwiesen, wenn die Komponenten zur Herstellung von kompakten Polyisocyanat-Polyadditionsprodukte vor der Verarbeitung durch Anlegen von Vakuum (1-759 Torr) entgast werden, um blasenfreie Formteile zu erhalten. Bei der Verarbeitung mit Polyurethan(PU)-Maschinen ist es auch vorteilhaft, wenn während der Verarbeitung die Vorlagebehälter unter vermindertem Druck stehen.

Die Ausgangskomponenten werden üblicherweise in Abhängigkeit vom Anwendungsfall bei einer Temperatur von 0 bis 100°C, vorzugsweise von 20 bis 80°C, gemischt und beispielsweise in das Formwerkzeug eingebracht. Die Vermischung kann, wie bereits dargelegt wurde, mechanisch mittels eines Rührers oder einer Rührschnecke durchgeführt werden, oder kann in einem üblichen Hochdruckmischkopf erfolgen.

Die Umsetzung des Reaktionsgemisches kann beispielsweise in üblichen, bevorzugt temperierbaren und verschließbaren, Form durchgeführt werden. Insbesondere bei der Herstellung von möglichst glatten Produkten werden als Formwerkzeuge bevorzugt solche verwendet, deren Oberfläche möglichst glatt oder definiert ornamentiert ist und bevorzugt keine Unebenheiten, Risse, Kratzer oder Verunreinigungen aufweist. Die Oberfläche dieser Form kann beispielsweise durch Polieren behandelt werden.

Als Formwerkzeuge zur Herstellung der Produkte können übliche und kommerziell erhältliche Werkzeuge eingesetzt werden, deren Oberfläche beispielsweise aus Stahl, Aluminium, Emaille, Teflon, Epoxyharz oder einem anderen polymeren Werkstoff besteht, wobei die Oberfläche gegebenenfalls verchromt, beispielsweise hartverchromt sein kann. Bevorzugt sollten die Formwerkzeuge temperierbar, um die bevorzugten Temperaturen einstellen zu können, verschließbar und bevorzugt zur Ausübung eines Druckes auf das Produkt ausgerüstet sein.

Die Umsetzung zu den Polyisocyanat-Polyadditionsprodukten erfolgt üblicherweise bei einer Formtemperatur, bevorzugt auch einer Temperatur der Ausgangskomponenten, von 20 bis 220°C, bevorzugt 30 bis 120°C, besonders bevorzugt 35 bis 80°C, für eine Dauer von üblicherweise 0,5 bis 30 min, bevorzugt 1 bis 5 min. Die Umsetzung im Formwerkzeug erfolgt erfindungsgemäß in direktem Kontakt mit (i). Dies kann beispielsweise dadurch erreicht werden, daß man (1) vor der Umsetzung, wenn es sich bei (i) um eine Folie handelt bevorzugt frei von Falten, in der Form plaziert und anschließend wie bereits beschrieben die Reaktionsmischung auf (i) füllt und anschließend bevorzugt die Form verschließt. Fasern als (e) können sowohl enthaltend in dem Reaktionsgemisch eingesetzt werden, als auch in Form von Matten oder Geweben. Werden Matten oder Gewebe als (e) eingesetzt, so können diese beispielsweise vor dem Einfüllen des Reaktionsmischung in die Form auf (i) plaziert werden und anschließend das Reaktionsgemisch, das in diesem Verfahren keine Fasern (e) zusätzlich zu den Matten oder Geweben enthaltend muß, in die Form eingefüllt werden.

Als Isocyanate (a) können allgemein bekannte (cyclo)aliphatische und/oder insbesondere aromatische Polyisocyanate eingesetzt werden. Zur Herstellung der erfindungsgemäßen Verbundelemente eignen sich besonders aromatische Diisocyanate, vorzugsweise Diphenylmethandiisocyanat (MDI) und Toluylendiisocyanat (TDI). Die Isocyanate können in Form der reinen Verbindung oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden.

Zusätzlich zu den erfindungsgemäßen Polyesterpolyalkoholen, auch Polyesterpolyole genannt, können gegebenenfalls weitere, allgemein bekannte gegenüber Isocyanaten reaktive Verbindungen als Komponente (b) eingesetzt werden, beispielsweise Polyetherpolyalkohole und Polycarbonatdiole, bevorzugt Polyetherpolyole, üblicherweise mit einem Molekulargewicht von 500 bis 10000, insbesondere 1000 bis 6000 und bevorzugt mit einer Funktionalität von 2 bis 6. Des weiteren können die erfindungsgemäßen Verbindungen (b) in Mischung mit Kettenverlängerungs- und/oder Vernetzungsmitteln verwendet werden. Bei den Kettenverlängerungsmitteln handelt es sich überwiegend um 2-funktionelle Alkohole mit Molekulargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargewichten von 60 bis 499 und 3 oder mehr aktiven H-Atomen, vorzugsweise Aminen und besonders bevorzugt Alkoholen, beispielsweise Glyzerin, Trimethylolpropan und/oder Pentaerythrit.

Besonders bevorzugt enthält die Komponente (b) mindestens 0,1, bevorzugt 0,4 bis 10 Gew.-%, bezogen auf das Gesamtgewicht der Komponente (b), der erfindungsgemäßen Polyesterpolyole. Besonders bevorzugt verwendet man zusätzlich zu den erfindungsgemäßen Polyestern als weitere Komponente (b) Polyetherpolyalkohole.

Als Katalysatoren (c) können übliche Verbindungen eingesetzt werden, die beispielsweise die Reaktion der Komponente (a) mit der Komponente (b) stark beschleunigen. In Frage kommen beispielsweise tertiäre Amine und/oder organische Metallverbindungen, insbesondere Zinnverbindungen. Bevorzugt werden als Katalysatoren solche eingesetzt, die zu einem möglichst geringen Fogging, d.h. zu einer möglichst geringen Abgabe von flüchtigen Verbindungen aus dem Umsetzungsprodukt (ii) führen, beispielsweise Kaliumacetat und/oder Li-Salze und/oder tertiäre Amine mit mindestens einer funktionellen Hydroxyl-Gruppe.

Als Treibmittel (d) können zur Herstellung von geschäumten Produkten (ii), beispielsweise Polyurethanweich-, halbhartoder hartschaumstoffen, die gegebenenfalls Harnstoff und/oder Isocyanuratstrukturen aufweisen können, allgemein bekannte chemisch oder physikalisch wirkende Verbindungen eingesetzt werden. Als chemisch wirkendes Treibmittel kann bevorzugt Wasser eingesetzt werden, welches durch Reaktion mit den Isocyatgruppen Kohlendioxid bildet. Beispiele für physikalische Treibmittel, d.h. solche, inerte Verbindungen, die unter den Bedingungen der Polyurethanbildung verdampfen, sind beispielsweise (cyclo)aliphatische Kohlenwasserstoffe, vorzugsweise solche mit 4 bis 8, besonders bevorzugt 4 bis 6 und insbesondere 5 Kohlenstoffatomen, teilhalogenierte Kohlenwasserstoffe oder Ether, Ketone oder Acetate. Die Menge der eingesetzten Treibmittel richtet sich nach der angestrebten Dichte der Schaumstoffe. Die unterschiedlichen Treibmittel können einzeln oder in beliebigen Mischungen untereinander zum Einsatz kommen.

Die Umsetzung erfolgt gegebenenfalls in Anwesenheit von (e) Hilfs- und/oder Zusatzstoffen, wie z.B. Füllstoffen, Fasern, z.B. in Form von Geweben und/oder Matten, Zellreglern, oberflächenaktiven Verbindungen und/oder Stabilisatoren gegen Oxidativen, thermischen oder mikrobiellen Abbau oder Alterung.

Die erfindungsgemäßen Verbundelemente weisen durch die Verwendung der eingangs beschriebenen Polyesterpolyole als Komponente (b) insbesondere eine deutlich verbesserte Haftung zwischen (i) und (ii) auf, d.h. eine Haftung zum thermoplastischen Trägermaterial insbesondere zu PC/ABS und SMA auf. Diese verbesserte Haftung gewährleistet, daß bei Abreißen des Schaums von dem Träger ganzflächig Schaumrückstände auf dem Träger verbleiben. Erfindungsgemäß konnte somit durch die Verwendung der erfindungsgemäßen Polyesterpolyalkohole erreicht werden, daß die Haftung zwischen (i) und (ii) bei Messung gemäß DIN 53289 oder 53530 im Neuzustand sowie nach Wärme- und Feuchtwärmelagerung eine Abschälkraft von ≥2,5 N/cm erreicht.

Die erfindungsgemäßen Verbundelemente werden bevorzugt als Bauteile im Fahrzeug-, Flugzeug- oder Immobilienbau eingesetzt, beispielsweise als Armaturenbretter, Türverkleidungen, Hutablagen, Konsolen, Armauflagen oder Türspiegel.

Die Erfindung wird in dem nachfolgenden Ausführungsbeispiel näher erläutert.

### Beispiel 1

Ein Polyesterpolyol mit einer Molmasse von 2000 g/mol und einer OH-Zahl 56 mg KOH/g, basierend auf der Kondensation von Adipinsäure mit Monoethylenglycol und Butandiol-1,4 im Molverhältnis 1:1 (Massenverhältnis Adipinsäure: 75,5, Monoethylenglycol: 17,6, Butandiol-1,4: 25,5) wurde in einem Anteil von 0,5 Masse-% in der B- (Polyol-) Komponente des Polyurethansystems zur Herstellung von Halbhartschaumstoffen Elastoflex® E 3464 der Elastogran GmbH, Lemförde eingesetzt.

Die Herstellung des Verbundelementes erfolgte in einer Prüfform der Dimension 200 x 200 x 40 mm bei einer Formtemperatur von 45°C. Die Temperatur beider Komponenten beträgt 23°C. In der Form wird das Trägermaterial als Platte (200 x 200 x 2 mm) am Deckel befestigt. Die Folie (200 x 200 x 1,5 mm) wird in den Formboden eingelegt. Angesetzt werden 165,5 g Polyolkomponente und 74,5 g Isocyanatkomponente. Dies entspricht einem Mischungsverhältnis von 1:0,45. In einem Polypropylenbecher werden die Komponenten für 10 Sekunden intensiv miteinander verrührt (Rührscheibe mit Durchmesser 65 mm und 1300 U/min). Dann wird das Gemisch 12 Sekunden lang in die offene Form gegossen. Die Eingetragene Menge beträgt dann 180 g. Nach 180 Sekunden wird die Form für 2 mm geöffnet. Nachdem der Forminnnendruck vollständig abgebaut ist wird die Form ganz geöffnet und das Formteil entnommen. Mechanische Prüfung und Haftungsprüfungen schließen sich an.

Die Eigenschaften der erfindungsgemäßen Verbundelemente sind in der Tabelle 1 dargestellt:

**Tabelle 1**

| Trägermaterial der Folie | SMA | PC/ABS | TPO |
|---|---|---|---|
| Schaumdichte [kg/m³] | 120 | 120 | 120 |
| Reißdehnung [%] | 45 | 45 | 45 |
| Zugfestigkeit [N/mm²] | 0,16 | 0,16 | 0,16 |
| Stauchhärte 40% [kPa] | 35,4 | 35,4 | 35,4 |
| Haftung nach 10 Minuten | 1 | 1 | 1 |
| Haftung nach Feucht-Wärme-Alterung | 1 | 1 | 1 |
| Haftung ohne Polyester | 6 | 2 | 6 |
| Haftung nach Feucht-Wärme ohne Polyester | - | 6 | - |

Bewertung der Haftung nach Abreißen des Schaums vom Trägermaterial:
- 1:: dicker Schaumbelag, läßt sich nicht abkratzen
- 2:: dünner Schaumbelag, läßt sich nicht abkratzen
- 3:: dünner Schaumbelag, läßt sich abkratzen
- 4:: 60 bis 80 % der Oberfläche hat einen Belag
- 5:: 20 bis 40 % der Oberfläche hat einen Belag
- 6:: keine Haftung, Schaum läßt sich ganzflächig vollständig abziehen
- - :: keine Angabe

## Patentansprüche

1. Verbundelemente enthaltend
i) thermoplastischen Kunststoff, an den sich haftend
ii) das Produkt der Umsetzung einer Reaktionsmischung enthaltend
(a) Isocyanat,
(b) Polyesterpolyalkohol mit einer Funktionalität von 2 bis 3 und einer Hydroxylzahl von 40 bis 400 mg KOH/g basierend auf der Kondensation von Adipinsäure (ADS) und/oder Phthalsäureanhydrid (PSA) mit Polytetrahydrofuran (PTHF), Hexan-1,6-diol, Butan-1,4-diol, Monoethylenglykol, Diethylenglykol, Trimethylolpropan und/oder Neopentylglykol
und gegebenenfalls
(c) Katalysatoren,
(d) Treibmittel und/oder
(e) Hilfs und/oder Zusatzstoffe anschließt.

2. Verbundelemente gemäß Anspruch 1 enthaltend als thermoplastischen Kunststoff Polyethylen, Polypropylen (TPO), Styrolmaleinsäureanhydrid (SMA) und/oder ein Polycarbonat/Styrol-Acrylnitril/Acrylnitril-Butadien Blend.

3. Verbundelemente nach Anspruch 1, **dadurch gekennzeichnet, daß** ein Polyesterpolyol enthaltend in (b) eine Hydroxylzahl von 40 bis 100 mg KOH/g und eine Funktionalität von 2 aufweist und auf der Kondensation von Adipinsäure (ADS) mit Hexan-1,6-diol, Butan-1,4-diol und/oder Monoethylenglykol basiert.

4. Verfahren zur Herstellung von Verbundelementen enthaltend (i) thermoplastischen Kunststoff und daran haftend Polyisocyanat-Polyadditionsprodukte, **dadurch gekennzeichnet, daß** man
(a) Isocyanat,
(b) Polyesterpolyalkohol mit einer Funktionalität von 2 bis 3 und einer Hydroxylzahl von 40 bis 400 mg KOH/g basierend auf der Kondensation von Adipinsäure (ADS) und/oder Phthalsäureanhydrid (PSA) mit Polytetrahydrofuran (PTHF), Hexan-1,6-diol, Butan-1, 4-diol, Monoethylenglykol, Diethylenglykol, Trimethylolpropan und/oder Neopentylglykol
und gegebenenfalls
(c) Katalysatoren,
(d) Treibmittel und/oder
(e) Hilfs und/oder Zusatzstoffe
in Gegenwart von (i) umsetzt.

5. Verfahren nach Anspruch 4, **dadurch gekennzeichnet, daß** man als (i) Polyethylen, Polypropylen (TPO), Styrolmaleinsäureanhydrid (SMA) und/oder ein Polycarbonat/Styrol-Acrylnitril/ Acrylnitril-Butadien Blend einsetzt.

6. Verfahren nach Anspruch 4, **dadurch gekennzeichnet, daß** ein Polyesterpolyol enthaltend in (b) eine Hydroxylzahl von 40 bis 100 mg KOH/g und eine Funktionalität von 2 aufweist und auf der Kondensation von Adipinsäure (ADS) mit Hexan-1,6-diol, Butan-1,4-diol und/oder Monoethylenglykol basiert.

7. Verwendung von Polyesterpolyalkoholen mit einer Funktionalität von 2 bis 3 und einer Hydroxylzahl von 40 bis 400 mg KOH/g basierend auf der Kondensation von Adipinsäure (ADS) und/oder Phthalsäureanhydrid (PSA) mit Polytetrahydrofuran (PTHF), Hexan-1,6-diol, Butan-1,4-diol, Monoethylenglykol, , Diethylenglykol, Trimethylolpropan und/oder Neopentylglykol zur Herstellung von Verbundelementen enthaltend (i) thermoplastischen Kunststoff und (ii) Polyisocyanat-Polyadditionsprodukte mit einer Haftung zwischen (i) und (ii) bei Messung gemäß DIN 53289 oder 53530 im Neuzustand eine Abschälkraft von ≥ 2,5 N/cm erreicht.

8. Verwendung von Verbundelementen gemäß Anspruch 1 als Bauteile im Fahrzeug-, Flugzeug- oder Immobilienbau.

9. Bauteile im Fahrzeug-, Flugzeug- oder Immobilienbau enthaltend Verbundelemente gemäß Anspruch 1.

## Claims

1. A composite element comprising
i) thermoplastic polymer adjoined in an adhering fashion by
ii) the product of the reaction of a reaction mixture comprising
(a) isocyanate,
(b) polyester polyalcohol having a functionality of from 2 to 3 and a hydroxyl number of from 40 to 400 mg KOH/g and based on the condensation of adipic acid (ADA) and/or phthalic anhydride (PA) with polytetrahydrofuran (PTHF), 1,6-hexanediol, 1,4-butanediol, monoethylene glycol, diethylene glycol, trimethylolpropane and/or neopentyl glycol
and, if desired,
(c) catalysts,
(d) blowing agents and/or
(e) auxiliaries and/or additives.

2. A composition element as claimed in claim 1 comprising, as thermoplastic polymer, polyethylene, polypropylene (TPO), styrene-maleic anhydride (SMA) and/or a polycarbonate/styrene-acrylonitrile/acrylonitrile-butadiene blend.

3. A composite element as claimed in claim 1, wherein a polyester polyol present in (b) has a hydroxyl number of from 40 to 100 mg KOH/g and a functionality of 2 and is based on the condensation of adipic acid (ADA) with 1,6-hexanediol, 1,4-butanediol and/or monoethylene glycol.

4. A process for producing composite elements comprising (I) thermoplastic polymer and, adhering thereto, polyisocyanate polyaddition products, which comprises reacting
(a) isocyanate,
(b) polyester polyalcohol having a functionality of from 2 to 3 and a hydroxyl number of from 40 to 400 mg KOH/g and based on the condensation of adipic acid (ADA) and/or phthalic anhydride (PA) with polytetrahydrofuran (PTHF), 1,6-hexanediol, 1,4-butanediol, monoethylene glycol, diethylene glycol, trimethylolpropane and/or neopentyl glycol
and, if desired,
(c) catalysts,
(d) blowing agents and/or
(e) auxiliaries and/or additives
in the presence of (i).

5. A process as claimed in claim 4 wherein component (i) used is polyethylene, polypropylene (TPO), styrene-maleic anhydride (SMA) and/or a polycarbonate/styrene-acrylonitrile/acrylonitrile-butadiene blend.

6. A process as claimed in claim 4, wherein a polyester polyol present in (b) has a hydroxyl number of from 40 to 100 mg KOH/g and a functionality of 2 and is based on the condensation of adipic acid (ADA) with 1,6-hexanediol, 1,4-butanediol and/or monoethylene glycol.

7. The use of polyester polyalcohols having a functionality of from 2 to 3 and a hydroxyl number of from 40 to 400 mg KOH/g and based on the condensation of adipic acid (ADA) and/or phthalic anhydride (PA) with polytetrahydrofuran (PTHF), 1,6-hexanediol, 1,4-butanediol, monoethylene glycol, diethylene glycol, trimethylolpropane and/or neopentyl glycol for producing composition elements comprising (i) thermoplastic polymer and (ii) polyisocyanate polyaddition products and having an adhesion between (i) and (ii) measured in accordance with DIN 53289 or 53530 in the as-produced state which achieves a peeling force of ≥ 2,5 N/cm.

8. The use of a composite element as claimed in claim 1 as a component in the construction of vehicles, aircraft or buildings.

9. A component in the construction of vehicles, aircraft or buildings which comprises a composite element as claimed in claim 1.

## Revendications

1. Éléments composites contenant
i) une matière synthétique thermoplastique à laquelle vient se fixer par adhérence
ii) le produit de la réaction d'un mélange réactionnel contenant
(a) un isocyanate,
(b) un polyesterpolyalcool possédant une fonctionnalité de 2 à 3 et un indice d'hydroxyle de 40 à 400 mg de KOH/g, se basant sur la condensation d'acide adipique (ADS) et/ou d'anhydride de l'acide phtalique (PSA) avec du polytétrahydrofuranne (PTHF), de l'hexane-1,6-diol, du butane-1,4-diol, du monoéthylèneglycol, du diéthylèneglycol, du triméthylolpropane et/ou du néopentylglycol
et éventuellement
(c) des catalyseurs,
(d) des agents moussants et/ou
(e) des adjuvants et/ou des additifs.

2. Éléments composites selon la revendication 1, contenant, à titre de matière synthétique thermoplastique, du polyéthylène, du polypropylène (TPO), de l'anhydride de l'acide styrènemaléique (SMA) et/ou un mélange de polycarbonate/styrène-acrylonitrile/acrylonitrile-butadiène.

3. Éléments composites selon la revendication 1, **caractérisés en ce qu'**un polyesterpolyol contenu dans (b) présente un indice d'hydroxyle de 40 à 100 mg de KOH/g et une fonctionnalité de 2 et se base sur la condensation d'acide adipique (ADS) avec de l'hexane-1,6-diol, du butane-1,4-diol et/ou du monoéthylèneglycol.

4. Procédé pour la fabrication d'éléments composites contenant (i) une matière synthétique thermoplastique et des produits de polyaddition de polyisocyanates qui viennent s'y fixer par adhérence, **caractérisé en ce qu'**on fait réagir
(a) un isocyanate,
(b) un polyesterpolyalcool possédant une fonctionnalité de 2 à 3 et un indice d'hydroxyle de 40 à 400 mg de KOH/g, se basant sur la condensation d'acide adipique (ADS) et/ou d'anhydride de l'acide phtalique (PSA) avec du polytétrahydrofuranne (PTHF), de l'hexane-1,6-diol, du butane-1,4-diol, du monoéthylène-glycol, du diéthylèneglycol, du triméthylolpropane et/ou du néopentylglycol
et éventuellement
(c) des catalyseurs,
(d) des agents moussants et/ou
(e) des adjuvants et/ou des additifs
en présence de (i).

5. Procédé selon la revendication 4, **caractérisé en ce qu'**on met en oeuvre, à titre de (i), du polyéthylène, du polypropylène (TPO), de l'anhydride de l'acide styrènemaléique (SMA) et/ou un mélange de polycarbonatelstyrène-acrylonitrile/acrylonitrile-butadiène..

6. Procédé selon la revendication 4, **caractérisé en ce qu'**un polyesterpolyol contenu dans (b) présente un indice d'hydroxyle de 40 à 100 mg de KOH/g et une fonctionnalité de 2 et se base sur la condensation d'acide adipique (ADS) avec de l'hexane-1,6-diol, du butane-1,4-diol et/ou du monoéthylèneglycol.

7. Utilisation de polyesterpolyalcools possédant une fonctionnalité de 2 à 3 et un indice d'hydroxyle de 40 à 400 mg de KOH/g, se basant sur la condensation d'acide adipique (ADS) et/ou d'anhydride de l'acide phtalique (PSA) avec du polytétrahydrofuranne (PTHF), de l'hexane-1,6-diol, du butane-1,4-diol, du monoéthylèneglycol, du diéthylèneglycol, du triméthylolpropane et/ou du néopentylglycol pour la fabrication d'éléments composites contenant (i) une matière synthétique thermoplastique et (ii) des produits de polyaddition de polyisocyanates, avec une adhérence entre (i) et (ii) qui, lorsqu'on la mesure conformément à la norme DIN 53289 ou 53530 à l'état neuf, permet d'obtenir une force d'adhérence de ≥ 2,5 N/cm.

8. Utilisation d'éléments composites selon revendication 1, à titre d'éléments de construction dans le domaine de la construction automobile, dans le domaine aéronautique et dans le domaine de la construction immobilière.

9. Eléments de construction dans le domaine de la construction automobile, dans le domaine aéronautique et dans le domaine de la construction immobilière contenant des éléments composites selon la revendication 1.
